# EUROPEAN PATENT APPLICATION

(11) **EP 2 650 999 A2**
(43) Date of publication of application: **16.10.2013**
(21) Application number: 13168340.1
(22) Date of filing: 08.04.2010
(51) Int. Cl.: H02J 3/36, H02J 3/18, H02M 1/32, H02M 7/483

(54) **Multi module voltage source converter for a HVDC system**

(62) Divisional of application: 10713204.5
(71) Applicant: Alstom Technology Ltd, 5400 Baden (CH)
(72) Inventor: Davidson, Colin Charnock, Stafford Staffordshire ST17 0JZ (GB); Trainer, David, Derby Derbyshire DE24 0AG (GB)
(74) Representative: Ilgart, Jean-Christophe

(57) **Abstract**

The invention relates to voltage source converter (30) for use in high voltage direct current power transmission and reactive power compensation comprising at least one chain-link converter (48) operably connected in use between AC and DC networks (40, 42), the chain-link converter including modules with at least two energy storage devices each, further including first and second pairs of electronic blocks connected in parallel with a first of the energy storage devices in a full-bridge arrangement to define a ladder-network module.

## Description

This invention relates to a voltage source converter for use in high voltage direct current (HVDC) power transmission and reactive power compensation.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect AC networks operating at different frequencies.

In any such power transmission network, converters are required at each interface between AC and DC power to effect the required conversion, and one such form of converter is a voltage source converter (VSC).

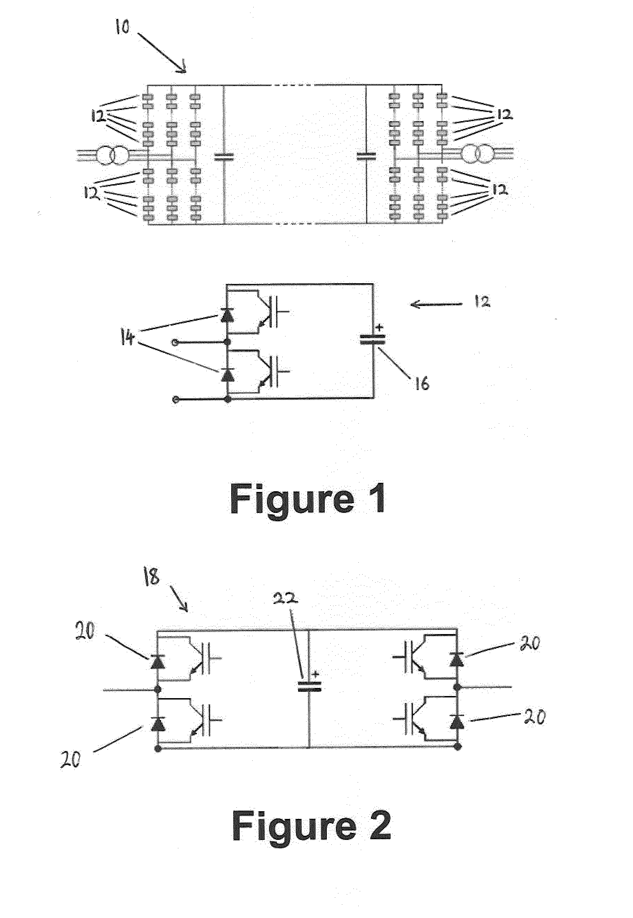

A known form of a voltage source converter 10 is shown in Figure 1. The voltage source converter comprises a plurality of half-link modules 12, each half-link module 12 including a pair of switching elements 14 connected in parallel with a capacitor 16 in a half-bridge arrangement. Each switching element 14 consists of an insulated gate bipolar transistor connected in parallel with an anti-parallel diode. The switching elements 14 of each half-link module 12 are operable so that the respective half-link module 12 provides zero or positive voltage and can conduct current in both directions. The magnitude of the positive voltage is dependent on the voltage level of the associated capacitor 16.

Instead of using half-link modules, the voltage source converter may utilise full-link modules 18 which include two pairs of switching elements 20 connected in parallel with a capacitor 22 in a full-bridge arrangement, as shown in Figure 2. The switching elements 20 of each full-link module 18 are operable so that the respective full-link module 18 provides positive, zero or negative voltage and can conduct current in both directions. The ability to provide a negative voltage and therefore an additional voltage output state increases the flexibility of the voltage source converter at the expense of increased converter size and costs.

According to an aspect of the invention, there is provided a voltage source converter for use in high voltage direct current power transmission and reactive power compensation comprising at least one chain-link converter operably connected in use between AC and DC networks, the or each chain-link converter including first and second groups of modules connected in series, each module including a plurality of primary switching elements connected to at least one energy storage device and the or each module of at least the first group including at least two energy storage devices, the primary switching elements of each module being controllable in use so that the respective chain of modules connected in series provides a stepped variable voltage source.

The provision of modules including two or more energy storage devices results in a chain-link converter with an increased number of discrete output voltage states. Conventional half-link and full-link modules can provide discrete output voltage states by inserting or bypassing their energy storage devices. The primary switching elements of each module of the present chain-link converter however are controllable to insert different combinations of multiple energy storage devices into circuit and thereby produce a higher number of discrete output voltage states. The increased number of discrete output voltage states results in a flexible voltage source converter arrangement.

In addition, the number of modules in such a chain-link converter may be reduced for a given voltage rating. This is because each module is capable of inserting multiple energy storage devices into circuit to generate a higher voltage than a module having only a single energy storage device. The reduction in the number of modules not only reduces the size, weight and cost of the voltage source converter, but also reduces overall conduction losses due to the reduction in overall number of primary switching elements.

The structure of the chain-link converter allows the build-up of a combined voltage, which is higher than the voltage provided by an individual module, via the insertion of multiple modules, each providing a voltage, into the chain-link converter. By varying the value of the combined voltage, the chain-link converter may be operated to generate a voltage waveform of variable amplitude and phase angle.

In embodiments of the invention, the voltage source converter may further include at least one converter limb including first and second DC terminals for connection in use to a DC network and an AC terminal for connection in use to an AC network, the or each converter limb defining first and second limb portions, each limb portion including a chain-link converter connected between a respective one of the first and second DC terminals and the AC terminal, each chain-link converter being operable to generate a voltage waveform at the respective AC terminal.

Such a voltage source converter arrangement may be utilised to facilitate power conversion between AC and DC networks.

In such embodiments, each limb portion may further include at least one secondary switching element connected in series with the chain-link converter between the respective DC terminal and the AC terminal, the secondary switching elements of the first and second limb portions being operable to switch the respective chain-link converter in and out of circuit between the respective DC terminal and the AC terminal.

The series combination of one or more secondary switching elements connected in series with a chain-link converter in each limb portion is advantageous because it reduces the number of components in the chain-link converter required to carry out voltage conversion between the AC and DC networks.

In other embodiments, the voltage source converter may include multiple converter limbs, each limb including an AC terminal for connection in use to a respective phase of a multi-phase AC network.

In such a voltage source converter, the series connection of the secondary switching elements and modules of each converter limb operates independently of that of the other converter limbs and therefore only directly affects the phase connected to the respective AC terminal, and has limited influence on the phases connected to the AC terminals of the other converter limbs.

In embodiments of the invention the energy storage devices of the or each module of the first group of modules may be connected with the respective primary switching elements in a half-bridge multi-level converter arrangement to define a 2-quadrant unipolar module that can provide zero or positive voltage and can conduct current in two directions.

In such embodiments, the or each module of the second groups of modules may include at least two energy storage devices and the energy storage devices of the or each module of the second group are connected with the respective primary switching elements in a half-bridge multi-level converter arrangement to define a 2-quadrant unipolar module that can provide zero or positive voltage and can conduct current in two directions.

In other such embodiments, the or each energy storage device of the or each module of the second group of modules is connected with the respective primary switching elements in a full-bridge arrangement to define a 4-quadrant bipolar module that can provide negative, zero or positive voltage and can conduct current in two directions.

In other embodiments, the energy storage devices of the or each module of the first group of modules may be connected with the respective primary switching elements in a full-bridge multi-level converter arrangement to define a 4-quadrant bipolar module that can provide negative, zero or positive voltage and can conduct current in two directions.

In further embodiments the or each module of the second group of modules may include at least two energy storage devices and the energy storage devices of the or each module of the second group may be connected with the respective primary switching elements in a full-bridge multi-level converter arrangement to define a 4-quadrant bipolar module that can provide negative, zero or positive voltage and can conduct current in two directions.

The first and second groups of modules may include equal numbers of modules. In other embodiments the first and second groups of modules may include different numbers of modules to each other, the ratio of modules between the two groups depending on the requirements of the associated power application.

Such multilevel converter arrangements may be in the form of a flying capacitor converter arrangement or a neutral point clamped converter arrangement.

The multi-level converter arrangement is compatible with the use of two or more energy storage devices to increase the number of discrete voltage output states of each module.

The combination of 2-quadrant unipolar modules and 4-quadrant bipolar modules provides the voltage source converter with DC fault blocking capability whilst minimising the number of switches in operation and thereby reducing switching losses.

In embodiments of the invention, at least one module including at least two energy storage devices may further include first and second pairs of electronic blocks connected in parallel with a first of the energy storage devices in a full-bridge arrangement to define a ladder-network module, each electronic block including a primary switching element, one of the first pair of electronic blocks further including a second of the energy storage devices connected in series with the primary switching element, wherein the primary switching elements of the or each ladder-network module are controllable in use so that the respective ladder-network module provides positive or negative voltage and can conduct current in two directions.

In such embodiments, the primary switching elements of the or each ladder-network module may be controllable in use so that the respective ladder-network module provides zero voltage and can conduct current in two directions.

In other such embodiments, the primary switching elements of each ladder-network module may be controllable in use so that the respective module provides at least two discrete positive voltages or at least two discrete negative voltages.

Such a provision results in a voltage source converter that is capable of producing an asymmetrical voltage output which allows the voltage source converter to interconnect AC and DC voltage of different magnitudes by increasing or decreasing the output AC voltage for a given DC voltage.

One of the second pair of electronic blocks preferably further includes a third of the energy storage devices.

The inclusion of a third energy storage device in one or more ladder-network modules provides greater flexibility when it comes to varying the characteristics of the discrete voltage output states and/or the asymmetrical voltage output of the ladder-network module to suit different power applications.

Preferably each switching element includes a semiconductor device. Such a semiconductor device may be in the form of an insulated gate bipolar transistor, a field effect transistor, a gate turn-off thyristor, a gate commutated thyristor or an integrated gate commutated thyristor.

In such embodiments employing the use of semiconductor devices, each switching element may further include an anti-parallel diode connected in parallel with the semiconductor device.

The use of semiconductor devices is advantageous because such devices are small in size and weight and have relatively low power dissipation, which minimises the need for cooling equipment. It therefore leads to significant reductions in power converter cost, size and weight.

The fast switching capabilities of such semiconductor devices allow the or each chain-link converter to synthesize complex waveforms for injection into the AC side and/or DC side of the voltage source converter. The injection of such complex waveforms can be used, for example, to minimise the levels of harmonic distortion typically associated with thyristor-based voltage source converters. Furthermore the inclusion of such semiconductor devices allow the voltage source converter to respond quickly to the development of AC and DC side faults and/or other abnormal operating conditions, and thereby improve fault protection of the voltage source converter.

In other embodiments each energy storage device may include a capacitor, a fuel cell, a battery or an auxiliary AC generator with an associated rectifier.

Such flexibility is useful in the design of converter stations in different locations where the availability of equipment may vary due to locality and transport difficulties. For example, the energy storage device of each module on an offshore wind farm may be provided in the form of an auxiliary AC generator connected to a wind turbine.

In further embodiments the primary switching elements of each module may be controllable in use to generate a voltage to oppose the flow of current created by a fault, in use, in the AC or DC networks.

Each module may be used to inject a voltage to provide the opposing voltage required to limit or extinguish the fault current and thereby prevent damage to the voltage source converter components. The use of the voltage source converter components to carry out both voltage conversion and extinguishment of fault currents may eliminate the need for separate protective circuit equipment, such as a circuit breaker or isolator. This leads to savings in terms of hardware size, weight and costs.

Each module may be operably connected in use to a global control unit and the primary switching elements of each module are controllable in use so that each module provides a voltage in response to control signals received from the global control unit.

The use of a single global control unit to control a plurality of modules, instead of an individual control unit for each module, results in savings in terms of size, weight and cost of the voltage source converter.

Furthermore each module may include a local control unit and the primary switching elements of each module are controllable in use so that each module provides a voltage in response to control signals received from the respective local control unit.

The use of a local control unit provides flexibility when it comes to controlling the voltage source converter. For example, it is possible to simplify the control of the voltage source converter by assigning control of the required voltage output states to the global control unit and control of the other less-used voltage output states to the local control unit. In such a configuration, the global control unit may be used to control each module to switch between two output states while the local control unit may be used to control the respective module to apply an intermediate voltage to soften the edges of an output voltage pulse of the converter switching between the two output states.

Preferably the primary switching elements of each module are controllable in use to regulate the voltage of the respective first and/or second energy storage devices.

The regulation of voltage levels provides additional control over the voltage levels of the energy storage devices of each module. This form of control may be used, for example, to balance the voltage levels of the individual modules. This is advantageous because it means that the voltage of any particular module can be kept approximately equal to an average module voltage to simplify the control and improve the performance of a voltage source converter which uses the average module voltage as feedback to control switching of the modules of the chain-link converter.

Preferred embodiments of the invention will now be described, by way of non-limiting examples, with reference to the accompanying drawings in which:
- Figure 1 shows, in schematic form, a prior art voltage source converter based on half-link modules;
- Figure 2 shows, in schematic form, the structure of a prior art full-link module;
- Figure 3 shows, in schematic form, a voltage source converter according to a first embodiment of the invention;
- Figures 4a and 4b show, in schematic form, a 2-quadrant unipolar module and a 4-quadrant bipolar module respectively having a three-level neutral point clamped converter arrangement;
- Figure 5 shows the synthesis of a 50Hz sinusoidal waveform using a chain-link converter
- Figure 6 shows the operation of the module of Figure 4a using global and local control units;
- Figure 7 shows the operation of the module of Figure 4a to achieve capacitor voltage balance;
- Figures 8a and 8b show, in schematic form, a 2-quadrant unipolar module and a 4-quadrant bipolar module respectively having a three-level flying capacitor converter arrangement;
- Figures 9a and 9b show, in schematic form, chain-link modules respectively having four-level and five-level neutral point clamped converter arrangements;
- Figure 10 shows, in schematic form, a full-bridge module including two capacitors based on a ladder network arrangement;
- Figures 11a to 11d show the operation of the full-bridge module in Figure 10;
- Figures 12a and 12b show, in schematic form, a full-bridge module including three capacitors based on a ladder network arrangement;
- Figure 13 shows a chain-link converter including a series connection of 2-quadrant unipolar modules and 4-quadrant bipolar modules; and
- Figure 14 shows the voltage output of the chain-link converter in Figure 13,

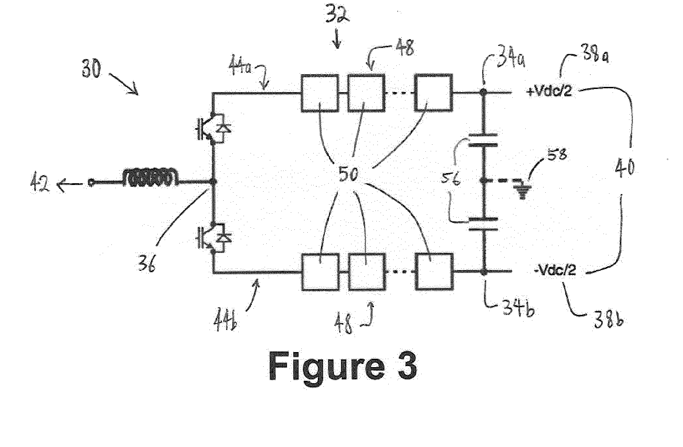

A voltage source converter 30 according to a first embodiment of the invention is shown in Figure 3.

The voltage source converter 30 comprises three converter limbs 32, each converter limb 32 including first and second DC terminals 34a,34b, and an AC terminal 36.

In use, the first and second DC terminals 34a,34b of each converter limb 32 are respectively connected to positive and negative terminals 38a,38b of a DC network 40, the positive and negative terminals 38a,38b respectively carrying a voltage of +V_{DC}/2 and - V_{DC}/2, where V_{DC} is the voltage range of the DC network 40.

In use, each AC terminal 36 is connected to a respective phase of a three-phase AC network 42.

Each converter limb 32 defines first and second limb portions 44a,44b, each limb portion 44a,44b including a secondary switching element 46, in the form of an insulated gate bipolar transistor with an reverse parallel-connected diode, connected in series with a chain-link converter 48 between a respective one of the first and second DC terminals 34a,34b and the AC terminal 36.

In further embodiments of the invention, it is envisaged that each secondary switching element 46 may be omitted from the respective limb portion 44a,44b so that each limb portion 44a,44b includes a chain-link converter 48 connected in series between the respective DC terminal 34a,34b and the AC terminal 36.

It is also envisaged that in other embodiments, each limb portion 44a,44b may include a string of secondary switching elements 46 connected in series with the chain-link converter 48 between the respective DC terminals 34a,34b and the AC terminal 36.

The series connection between the secondary switching element 46 and the chain-link converter 48 of each of the first and second limb portions 44a,44b means that, in other embodiments, they may be connected in a reverse order between the AC terminal 36 and the respective DC terminal 34a,34b.

Each chain-link converter 48 includes first and second groups of modules 50 connected in series. Each of the first and second groups includes one or more modules 50. The or each module 50 of the first and second groups of modules includes a plurality of primary switching elements connected to at least one capacitor and the or each module of at least the first group includes at least two capacitors..

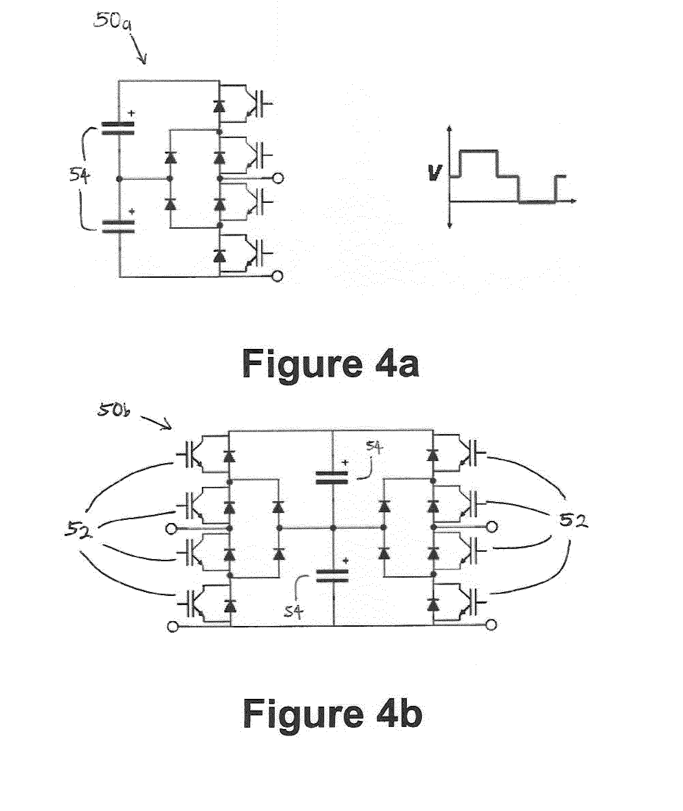

In embodiments of the invention, the capacitors 54 of the or each module of the first and/or second group of modules are connected with the plurality of primary switching elements 52 in a half-bridge three-level neutral point clamped converter arrangement to define a 2-quadrant unipolar module 50a that can provide zero or positive voltage and can conduct current in two directions, as shown in Figure 4a. Such a module 50a may be operated as follows:
- Each capacitor 54 of each module 50a may be bypassed or inserted into the chain-link converter by changing the state of the primary switching elements 52.

Both capacitors 54 of the module 50a are bypassed when the primary switching elements 52 are configured to form a short circuit in the module 50a, causing the current in the voltage source converter to pass through the short circuit and bypass both capacitors 54. This enables the module 50a to provide a zero voltage.

Both capacitors 54 of the module 50a are inserted into the chain-link converter when the primary switching elements 52 are configured to allow the converter current to flow into and out of both capacitors 54 which are then able to charge or to discharge their stored energies and provide a combined voltage.

One capacitor 54 of the module 50a is inserted into the chain-link converter when the primary switching elements 52 are configured to allow the converter current to bypass a capacitor 54 and to flow into and out of the other capacitor 54 which is then able to charge or to discharge its stored energy and provide an intermediate voltage which lies between zero voltage and the combined voltage of the two capacitors 54.

In addition, the module 50a can conduct current in both directions when both of the capacitors 54 are either bypassed or inserted into the respective chain-link converter, or when one capacitor 54 is bypassed and the other capacitor 54 is inserted into the respective chain-link converter.

In other embodiments, the capacitors 54 of the or each module of the first and/or second group of modules are connected with the plurality of primary switching elements 52 in a full-bridge three-level neutral point clamped converter arrangement to define a 4-quadrant bipolar module 50b that can provide positive, zero or negative voltage and can conduct current in two directions, as shown in Figure 4b.

The operation of the 4-quadrant bipolar module 50b of Figure 4b is similar to the 2-quadrant bipolar module 50a of Figure 4a in that the primary switching elements 52 of the 4-quadrant bipolar module 50b are controllable in use to bypass or insert both of the capacitors 54 into the chain-link converter, or bypass one capacitor 54 and insert the other capacitor 54 into the chain-link converter. The full-bridge arrangement allows the primary switching elements 52 to be configured to insert either or both capacitors 54 in the chain-link converter in either forward and reverse positions to allow either direction of current flow through one or both capacitors 54 so as to provide a positive or negative voltage.

Chain-link converters 48 based on 4-quadrant bipolar modules can be operated in four quadrants by controlling the phase angle and magnitude of the AC side generated waveform and therefore can absorb or generate real and reactive power.

The provision of modules having two or more capacitors therefore results in a chain-link converter 48 with an increased number of discrete voltage output states over chain-link converters based on conventional half-link and full-link modules, which leads to a flexible voltage source converter arrangement.

It is envisaged that, in embodiments of the invention employing the use of 4-quadrant bipolar modules, the voltage levels at the positive and negative terminals 38a,38b of the DC network 40 may vary in magnitude and/or the first and second DC terminals 34a,34b of each converter limb 32 may be connected in use to a DC network 40 of reverse polarity such that the first and second DC terminals 34a,34b of each converter limb 32 are respectively connected to negative and positive terminals of the DC network 40.

The primary switching elements of each module 50 are operable so that the chain of modules 50 provides a stepped variable voltage source, and are switched at near to the fundamental frequency of the AC network 42.

The structure of each chain-link converter 48 allows the build-up of a combined voltage across the chain-link converter 48 which is higher than the voltage available from each of the individual modules 50 via the insertion of the capacitors of multiple modules 50, each providing its own voltage, into the chain-link converter 48.

The number of modules 50 in such a chain-link converter 48 may be reduced for a given voltage rating because the chain-converter 48 includes modules that are capable of inserting multiple capacitors into circuit to generate a higher voltage than a module having a single capacitor 54. The reduction of the number of modules 50 in the chain-link converter 48 conveys several advantages. One advantage is that the converter arrangement leads to a reduction in the overall number of primary switching elements per voltage source converter 30 and therefore a decrease in conduction losses and hardware size, weight and costs. Another advantage of the converter arrangement is that it is possible to reduce the number of bypass switches and crowbar thyristors in the voltage source converter 30, whereby each module 50 is associated with a bypass switch and a crowbar thyristor to prevent over-voltage of the module 50. In addition, the reduction in the number of required modules 50 simplifies the control requirements for the voltage source converter 30 by reducing the required number of transmission links and channels in the associated control unit.

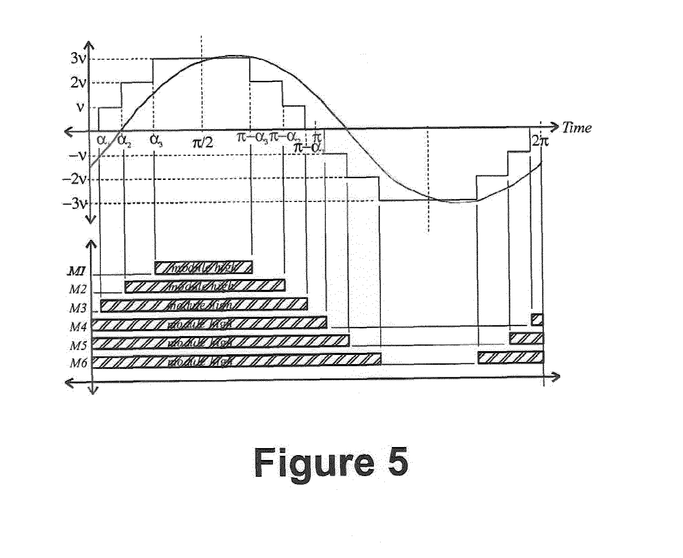

It is possible to vary the timing of switching operations for each module such that the insertion and/or bypass of the capacitors of individual modules in the chain-link converter results in the generation of a voltage waveform. An example of a voltage waveform generated using the chain-link converter is shown in Figure 5, in which the insertion of the capacitors of the individual modules is staggered to generate a 50 Hz sinusoidal waveform. Other waveform shapes may be generated by adjusting the timing of switching operations for each module in the chain-link converter.

Preferably each switching element 46,52 includes an insulated gate bipolar transistor accompanied by a reverse-parallel connected diode.

It is envisaged that in other embodiments each of the primary and/or secondary switching elements 46,52 may include a different semiconductor device, such as a field effect transistor, a gate-turn-off thyristor, a gate-commutated thyristor, an integrated gate-commutated thyristor or other self commutated semiconductor switches, accompanied by a reverse-parallel connected diode.

The fast switching capabilities of such semiconductor devices allow the chain-link converter 48 to synthesize complex waveforms for injection into the voltage source converter 30, and thereby provide excellent control and flexibility over the generation of a voltage waveform. The synthesis and injection of complex waveforms can be used to minimise harmonic distortion which are typically present in thyristor-based power conversion.

It is also envisaged that, in other embodiments, each capacitor of each module 50 may be replaced by a different energy storage device such as a fuel cell, a battery or an auxiliary AC generator with an associated rectifier.

The voltage source converter 30 may further include a pair of DC link capacitors 56 connected between the first and second DC terminals, a mid-point between the pair of DC link capacitors 56 being connected in use to ground 58, as shown in Figure 3.

It is envisaged that in embodiments of the invention the voltage source converter 30 may include any number of converter limbs 32, each converter limb 32 including an AC terminal 36 for connection in use to a respective phase of a single-phase or multi-phase AC network 42.

In use, the secondary switching elements 46 of the first and second limb portions 44a,44b are operable to switch each of the chain-link converters 48 in and out of circuit between the respective DC terminal 38a,38b and the AC terminal 36. Each chain-link converter 48 is operable to generate a voltage waveform at the respective AC terminal 36 via bypass or insertion of either or both of the capacitors of its modules 50.

Each chain-link converter 48 is preferably operable to generate a sinusoidal voltage waveform using a step-wise approximation. The chain-link converters 48 are suitable for use in step-wise waveform generation due to their ability to provide voltage steps to increase or decrease the output voltage at the AC terminal 36.

As previously described, the switching operations in the modules may be configured so that the insertion and bypass of the capacitors are staggered to form a step-wise approximation of a sinusoidal waveform, as shown in Figure 5. The step-wise approximation of the voltage waveform may be improved by using a higher number of modules with lower voltage levels to increase the number of voltage steps, and/or by controlling one or more modules of the chain-link converter to each present an intermediate voltage so as to provide a smoother transition between voltage steps.

Initially the secondary switching element 46 of the first limb portion 44a is closed while the secondary switching element 46 of the second limb portion 44b is open. The chain-link converter 48 in the first limb portion 44a is controlled to provide a voltage of +V_{DC}/2 so that it opposes the voltage at the positive terminal 38a of the DC network 40. The output voltage at the AC terminal 36 is therefore zero volts i.e. halfway between the positive DC voltage at the positive terminal 38a, +V_{DC}/2, and the negative DC voltage at the negative terminal 38b, -V_{DC}/2. Any unused modules 50 are left in bypass mode.

In order to generate the positive voltage component of the sinusoidal voltage waveform, the output voltage is slowly increased by reducing the number of inserted capacitors of modules 50 in the chain-link converter 48 and thereby reducing the chain-link converter voltage. The change in the chain-link converter voltage can be observed in the step-wise increments of the output voltage at the AC terminal 36. At the peak of the positive voltage component, the chain-link converter 48 may be bypassed to produce a peak value equal to the positive DC voltage, +V_{DC}/2, or it may produce a voltage that adds to the positive DC voltage of the DC network 40. The positive voltage component produced may therefore have a peak that is higher than the positive DC voltage of the DC network 40, if desired.

During the generation of the positive voltage component of the sinusoidal voltage waveform, the voltage across the second limb portion 44b is equal to the difference between the output voltage and the negative DC voltage at the negative terminal 38b, -V_{DC}/2 of the DC network 40.

The chain-link converter 48 of the first limb portion 44b is then controlled to reduce the output voltage in step-wise decrements by controlling the combined voltage across the chain-link converter 48 until the output voltage returns to zero.

When the output voltage returns to zero, the secondary switching element 46 in the first limb portion 44a can remain closed when the secondary switching element 46 of the second limb portion 44b is closed and before the secondary switching element 46 in the first limb portion 44a is opened.

The full voltage range of the DC network 40, V_{DC}, is opposed by the voltage provided by the chain-link converters 48 in both limb portions 44a,44b during the switching operations of both secondary switching element 46 from one state to the other.

The chain-link converter 48 in the first limb portion 44a is controlled to provide a voltage of +V_{DC}/2 while the chain-link converter 48 in the second limb portion 44b is controlled to provide a voltage of -V_{DC}/2. As a result, there is zero or minimal voltage across the secondary switching element 46 of the first and second limb portions 44a,44b when the secondary switching element 46 switch from one state to the other. The low voltage across the secondary switching element 46 of each of the limb portions 44a,44b leads to low switching losses.

The generation of the negative voltage component of the sinusoidal waveform is similar to the generation of the positive voltage component except that the secondary switching element 46 of the first limb portion 44a remains open and the secondary switching element 46 of the second limb portion 44b remains closed, and the generation of the voltage waveform is caused by the insertion and bypass of modules 50 in the chain-link converter 48 of the second limb portion 44b.

During generation of the negative voltage component of the sinusoidal voltage waveform, the voltage across the first limb portion 44a is equal to the difference between the output voltage and the positive DC voltage at the positive terminal 38a, +V_{DC}/2 of the DC network 40.

The voltage capability of each limb portion 44a,44b is a combination of the voltage capability of the respective chain-link converter 48 and the voltage rating of the respective secondary switching element 46 and can be distributed in a non-symmetrical manner if desired. It is possible to reduce the number of modules 50 in each chain-link converter 48 by increasing the number of secondary switching elements 46 in each limb portion 44a,44b.

The voltage source converter 30 may be operated to produce a peak AC voltage that exceeds the DC voltage across the positive and negative terminals 38a,38b of the DC network 40. In order to produce such a peak AC voltage, the primary switching elements of each module 50 may be configured to provide a voltage such that the combined voltage across the chain-link converter 48 is added to the positive or negative DC voltage of the AC network 42 to increase the magnitude of the output voltage at the AC terminal 36. This leads to a greater power output for a given current rating of the voltage source converter 30.

Preferably the or each module 50 may be operably connected in use to a global control unit and the primary switching elements of the or each module 50 are controllable in use so that the or each module 50 provides a voltage in response to control signals received from the global control unit.

Assigning control of a plurality of modules 50 to a single global control unit results in the reduction of required transmission links and control units, and therefore a decrease in hardware size, weight and costs. Such a reduction in the number of converter components not only reduces the size of the power station's footprint but also eases the transportation of heavy converter components to the site of the power station.

Each module 50 may preferably further include a local control unit and the primary switching elements of the or each module 50 are controllable in use so that the or each module 50 provides a voltage in response to control signals received from the respective local control unit.

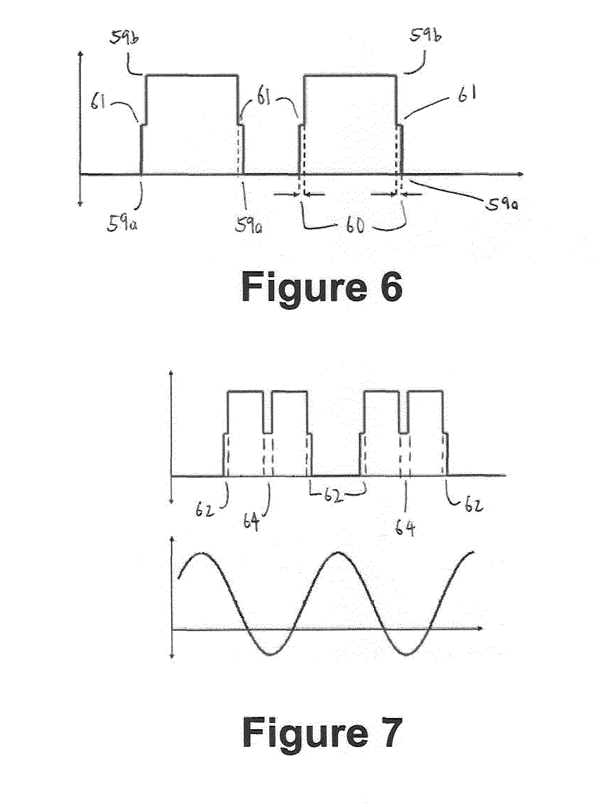

The provision of a local control unit provides flexibility during control of the voltage source converter 30. For example, it is possible to simplify the control of the voltage source converter 30 by assigning control of the required voltage output states to the global control unit and control of the other less-used voltage output states to the local control unit of the module 50. In such a configuration, the global control unit may be used, for example, to control the module 50a of Figure 4a to switch between a zero voltage output state 59a and a positive voltage output state 59b while each local control unit may be used to control the module 50a to switch to an intermediate voltage 61 which lies between the zero and positive voltage output levels 59a,59b, as shown in Figure 6.

The intermediate voltage output state 61 under the control of the local control unit is applied during the transition between the zero and positive voltage output states 59a,59b under the control of the global control unit. The time period 60 for application of the intermediate voltage may be in the order of microseconds to minimise conduction losses, for example, in the clamping diodes of modules based on a neutral point clamped converter arrangement. The application of the intermediate voltage 61 acts to "soften" the edges of the output voltage pulse generated by the module to provide a more gradual transition between the zero and positive voltage output states 59a,59b under the control of the global control unit. Otherwise, in the absence of such intermediate voltages, the output voltage of the module ramps between the zero and positive voltage output states 59a,59b under the control of the global unit. This may result in the occurrence of large voltage at the AC and DC terminals of the voltage source converter and thereby causing unacceptable harmonic distortion and/or electromagnetic interference.

Preferably the primary switching elements of each module 50 are controllable in use to regulate the voltage of the respective capacitors. Regulation of the voltage levels of the capacitors may be applied to keep the voltage of each capacitor approximately equal to an average module voltage to simplify the control and improve the performance of a voltage source converter 30 which relies on the average module voltage as feedback to control switching of the modules 50 of the chain-link converter 48.

For example, the voltage levels of the capacitors 54 of the module 50a of Figure 4a may be regulated as follows:

When both capacitors 54 of the 2-quadrant unipolar module 50a are bypassed, there is no current flow through the bypassed capacitors 54. When both capacitors 54 are inserted into the module, current flows through both inserted capacitors 54. In both situations, the voltage levels of the capacitors 54 remain balanced since there is minimal variation in the charge or discharge behaviours of the capacitors 54.

However, when one capacitor 54 is inserted into the module 50a and the other capacitor 54 is bypassed, current only flows through the inserted capacitor 54 which will charge or discharge while the voltage level of the bypassed capacitor 54 remains unchanged. This results in an imbalance of voltage levels between the capacitors 54. This imbalance is further amplified as a result of the operation of the module 50a over multiple cycles during the lifetime of the voltage source converter. Such an imbalance results in an inefficient voltage source converter.

In order to address this imbalance, one capacitor 54 may be inserted into the module 50a of Figure 4a for a first set time period 62 when the current flows in one direction and for a second set time period 64 when the current flows in the other direction, as shown in Figure 7. The first and second set time periods 62,64 are approximately equal over the course of several cycles so that the voltage level of the inserted capacitor 54 remains approximately unchanged and therefore the voltage level variation between the capacitors 54 remains at a minimum. The first and second set time periods 62,64 may be in the order of microseconds so as to minimise its effect on the output voltage of the module 50a and the associated chain-link converter.

The voltage regulation process may be under the control of a global control unit and/or a local control unit of the individual module 50. A closed loop control may be applied to monitor the voltage levels of the capacitors and therefore determine the next course of action to balance the voltage levels of the capacitors. For example, the closed loop control may be used to insert one of the capacitors until the inserted capacitor reaches a target voltage level.

The closed loop control may include a simple current sensor such as a Hall-effect device to monitor the polarity of the current.

It is also possible to determine the direction and magnitude of current based on the rate of change of voltage of the capacitor.

In a chain-link converter 48 based on full-bridge modules, the ability of each full-bridge module to provide positive or negative voltages means that the voltage across each chain-link converter 48 may be built up from a combination of full-bridge modules providing positive or negative voltages. The energy levels in the individual capacitors may be maintained therefore at optimal levels by controlling the full-bridge modules to alternate between providing positive or negative voltage.

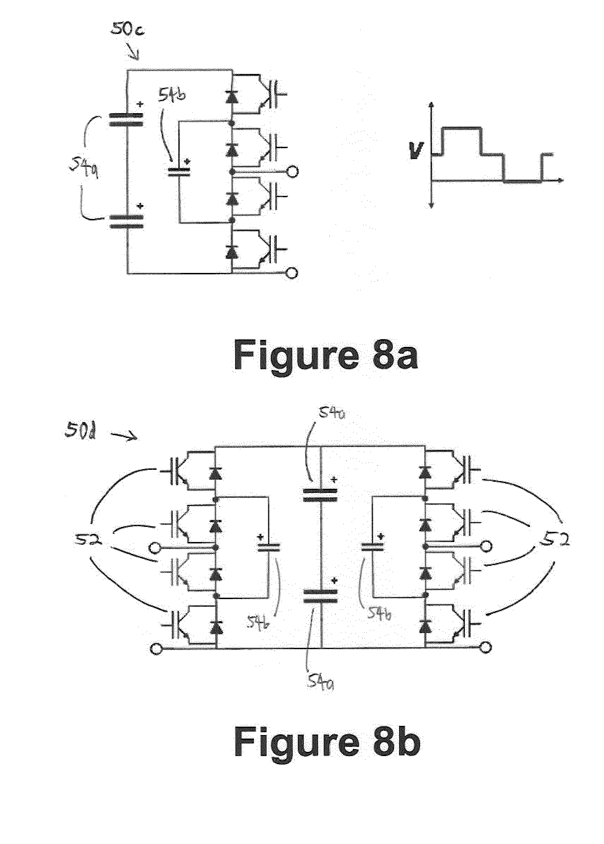

In other embodiments, the capacitors 54a,54b of the or each module of the first and/or second group of modules are connected with the plurality of primary switching elements 52 in a half-bridge three-level flying capacitor arrangement to define a 2-quadrant unipolar module 50c that can provide zero or positive voltage and can conduct current in two directions, as shown in Figure 8a. The three capacitors 54a,54b consist of two main capacitors 54a and an auxiliary capacitor 54b. It is envisaged that in other embodiments the two main capacitors 54a may be replaced by a single main capacitor 54 having the combined voltage rating of the two main capacitors 54a.

Each capacitor 54a,54b of the module 50c of Figure 8a may be bypassed or inserted into the chain-link converter by changing the state of the primary switching elements 52.

All three capacitors 54a,54b of the module 50c are bypassed when the primary switching elements 52 are configured to form a short circuit in the module, causing the current in the voltage source converter to pass through the short circuit and bypass all three capacitors 54a,54b. This enables the module 50c to provide a zero voltage.

Both main capacitors 54a of the module 50c are inserted into the chain-link converter when the primary switching elements 52 are configured to allow the converter current to bypass the auxiliary capacitor 54b and to flow into and out of both main capacitors 54a which are then able to charge or to discharge their stored energies and provide a combined voltage of the two main capacitors 54a.

All three capacitors 54a,54b of the module 50c are inserted into the chain-link converter when the primary switching elements 52 are configured to allow the converter current to flow into and out of the auxiliary and main capacitors 54a,54b which are then able to charge or to discharge their stored energies and provide a combined voltage of the three capacitors 54a,54b. The magnitude of this combined voltage lies between zero voltage and the combined voltage of the two main capacitors 54a.

The auxiliary capacitor 54b is inserted into the chain-link converter when the primary switching elements 52 are configured to allow the converter current to bypass the main capacitors 54a and to flow into and out of the auxiliary capacitor 54b which is then able to charge or discharge its stored energy and provide a voltage which may be equal in magnitude to the combined voltage provided by the insertion of the three capacitors 54a,54b.

As such, insertion of the three capacitors 54a,54b or only the auxiliary capacitor 54b of the module 50c results in the provision of an intermediate voltage output state of the module 50c.

The provision of an auxiliary capacitor 54b provides additional control over the voltage levels of the module 50c. This is because the primary switching elements 52 are controllable in use to insert the auxiliary capacitor 54b into circuit in either forward or reverse direction to either charge or discharge depending on the direction of converter current. It is therefore possible to achieve voltage balance between the capacitors 54a,54b via insertion of the auxiliary capacitor 54b.

Operation of the module 50c to achieve voltage balance between the capacitors 54a,54b has minimal effect on the voltage output of the module 50c because insertion of the auxiliary capacitor 54b into circuit in either direction results in identical voltage outputs of the module 50c and therefore has limited effect on the intermediate voltage output state of the module 50c.

In addition, the module 50c of Figure 8a can conduct current in both directions in each of its modes of operation.

In further embodiments, the capacitors 54a,54b of the or each module of the first and/or second group of modules are connected with the plurality of primary switching elements 52 in a full-bridge three-level flying capacitor converter arrangement to define a 4-quadrant bipolar module 50d that can provide positive, zero or negative voltage and can conduct current in two directions, as shown in Figure 8b.

The operation of the 4-quadrant bipolar module 50d of Figure 8b to provide a voltage is similar to the 2-quadrant bipolar module 50c of Figure 8a. The full-bridge arrangement allows the primary switching elements 52 to be configured to insert the main capacitors 54a in the chain-link converter in either forward and reverse positions to allow either direction of current flow through the main and/or auxiliary capacitors 54a,54b so as to provide a positive or negative voltage.

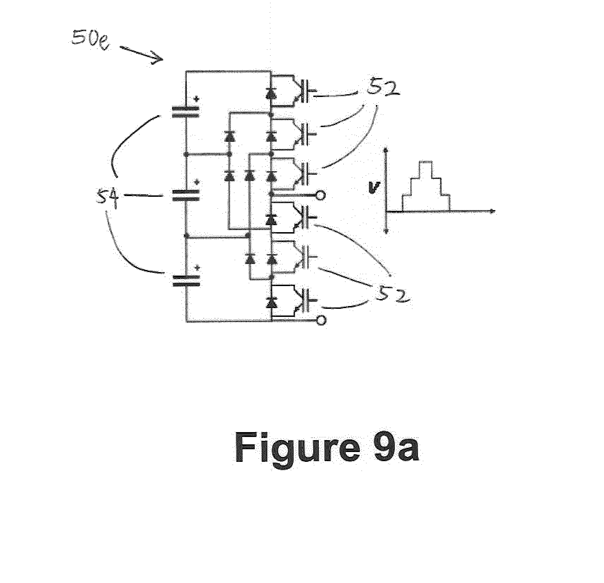

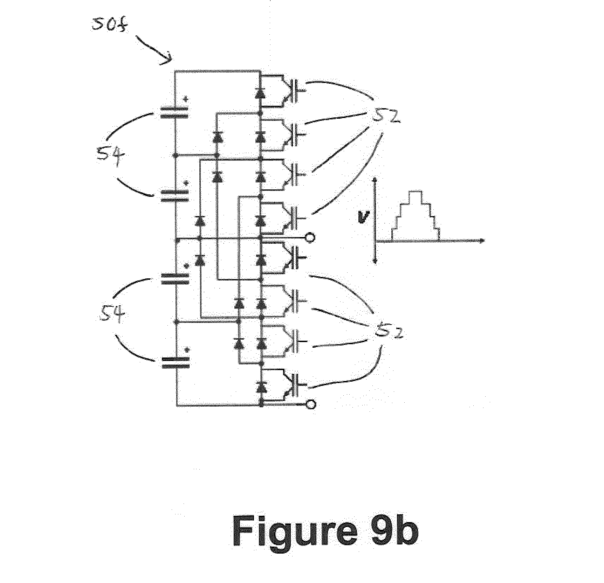

In other embodiments, the capacitors 54 of the or each module of the first and/or second group of modules are connected with the plurality of primary switching elements 52 in four-level and five-level neutral point clamped converter arrangements respectively, as shown in Figures 9a and 9b. It is envisaged that in other embodiments of the invention, the primary switching elements 52 and the capacitors 54 may be arranged using other multilevel converter arrangements to form modules of a chain-link converter, the primary switching elements 52 being controllable in use so that the modules 50 provide a stepped variable voltage source.

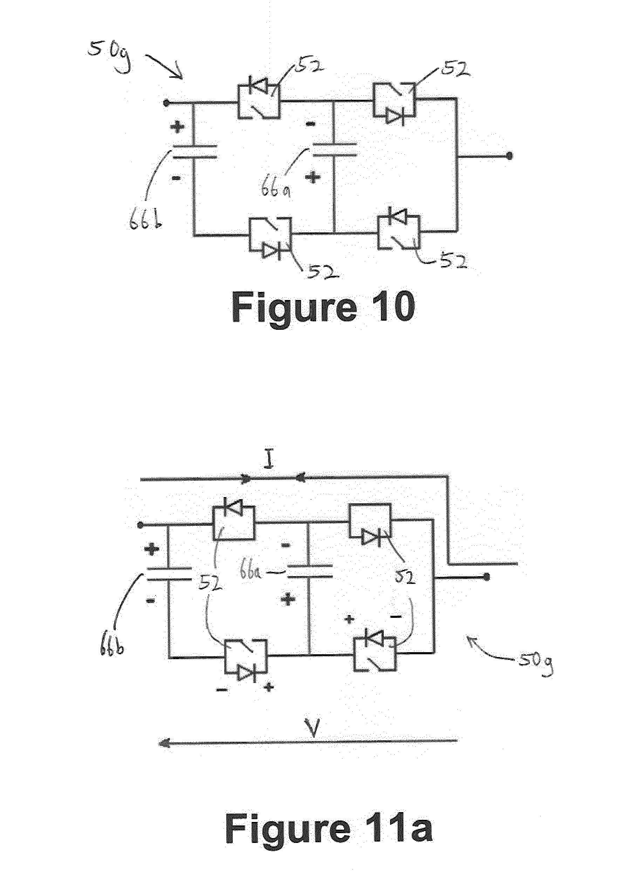

In other embodiments, at least one module 50g may include first and second pairs of electronic blocks connected in parallel with a first capacitor 66a in a full-bridge arrangement to define a ladder-network module, as shown in Figure 10. Each electronic block includes a primary switching element 52 in the form of an insulated gate bipolar transistor connected with a reverse-parallel connected diode. One of the first pair of electronic blocks further includes a second capacitor 66b connected in series with its primary switching element 52.

The first and second capacitors 66a,66b of each ladder-network module 50g may be bypassed or inserted into the chain-link converter by changing the state of the primary switching elements 52. When inserted into the chain-link converter, each of the first and second capacitors 66a,66b is capable of discharging its stored energy to provide a voltage.

In Figure 11a, the first and second capacitors 66a,66b of the ladder-network module 50g are bypassed when the primary switching elements 52 are configured to form a short circuit in the ladder-network module 50g, causing the current in the voltage source converter to pass through the short circuit and bypass the first and second capacitors 66a,66b. This enables the ladder-network module 50g to provide a zero voltage.

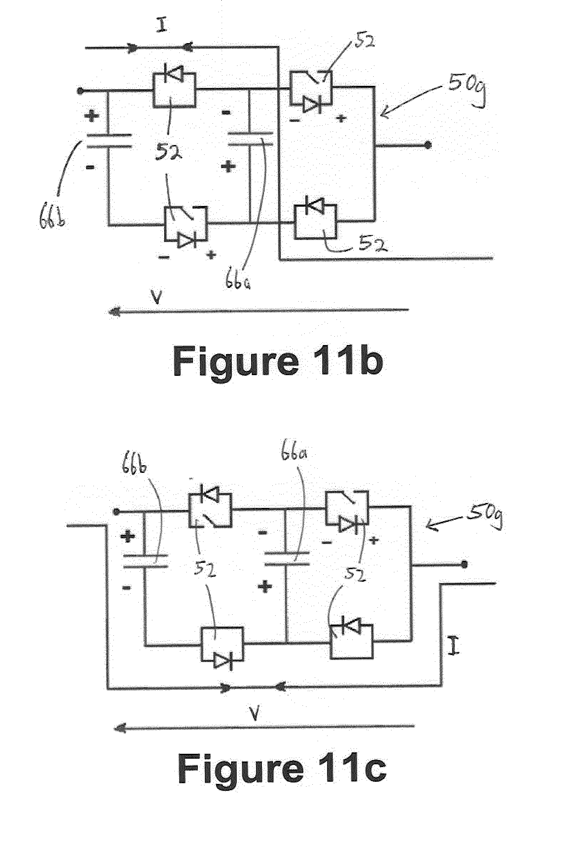

In Figure 11b, the first capacitor 66a of the ladder-network module 50g is inserted into the chain-link converter when the primary switching elements 52 are configured to allow the converter current to flow into and out of the first capacitor 66a, which is then able to charge or to discharge its stored energy and provide a voltage of -V_{DC}/2 in magnitude. The second capacitor 66b is bypassed in this configuration and thereby does not contribute a voltage to the voltage source converter.

In Figure 11c, the second capacitor 66b of the ladder-network module 50g is inserted into the chain-link converter when the primary switching elements 52 are configured to allow the converter current to flow into and out of the second capacitor 66b, which is then able to charge or to discharge its stored energy and provide a voltage of +V_{DC}/2. The first capacitor 66a is bypassed in this configuration and thereby does not contribute a voltage to the voltage source converter.

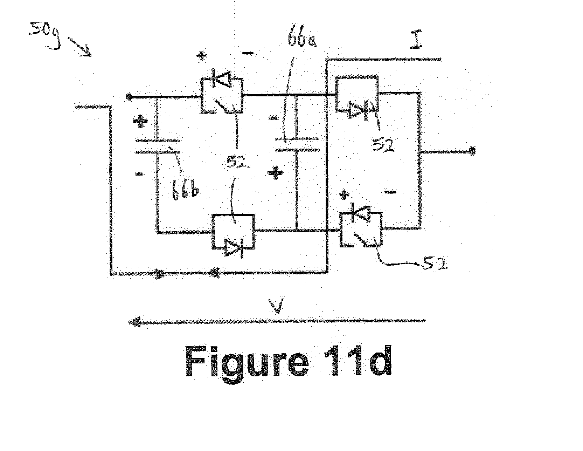

In Figure 11d, the first and second capacitors 66a,66b of the ladder-network module 50g are inserted into the chain-link converter when the primary switching elements 52 are configured to allow the converter current to flow into and out of the first and second capacitors 66a,66b, which are then both able to charge or to discharge their respective stored energies and provide a combined voltage of +V_{DC}.

In other embodiments, it is envisaged that the insertion of the first and/or second capacitors 66a,66b may result in the provision of a module voltage of different polarity by connecting each of the first and second capacitors 66a,66b in a reverse configuration.

The provision of the second capacitor 66b therefore allows the ladder-network module 50g to provide either two discrete positive voltages or two discrete negative voltages. Consequently the ladder-network module 50g is capable of generating four discrete voltage output states in the form of a positive voltage, a zero voltage, a negative voltage and an additional positive or negative voltage and therefore an asymmetrical voltage output. The asymmetrical voltage output of the ladder-network module 50g may be used to interconnect electrical networks with voltages of different magnitudes.

In addition, the ladder-network module 50g can conduct current in both directions when each of the first and second capacitors 66a,66b is either bypassed or inserted into the respective chain-link converter.

The insertion of first and second capacitors 66a,66b to provide a combined voltage results in a larger voltage output of the ladder-network module 50g when compared to a conventional half-link or full-link module, each of which is capable of contributing a voltage equal to that of a single capacitor. Consequently, to achieve a specific voltage rating, a voltage source converter 30 based on one or more ladder-network modules 50g of Figure 10 will require fewer ladder-network modules 50g than a voltage source converter based on conventional half-link or full-link modules.

Each primary switching element 52 of the pair of electronic blocks including the second capacitor 66b has a voltage rating which is twice the voltage rating of each primary switching element 52 of the other pair of electronic blocks. This is because each primary switching element 52 of the pair of electronic blocks including the second capacitor 66b is required to be able to support a voltage equal to the combined voltage of the fist and second capacitors 66a,66b whereas each primary switching element 52 of the other pair of electronic blocks are only required to be able to support a voltage equal to the voltage level of either of the first and second capacitors 66a,66b.

In other embodiments, one of the second pair of electronic blocks may further include a third capacitor 66c.

The third capacitor 66c of each ladder-network module 50h may be bypassed or inserted into the chain-link converter by changing the state of the primary switching elements 52. When inserted into the chain-link converter 48, the third capacitor 66a,66b is capable of discharging its stored energy to provide a voltage.

The third capacitor 66c may be incorporated into either one of the second pair of electronic blocks, which results in different configurations of the ladder-network module 50h including the third capacitor 66c.

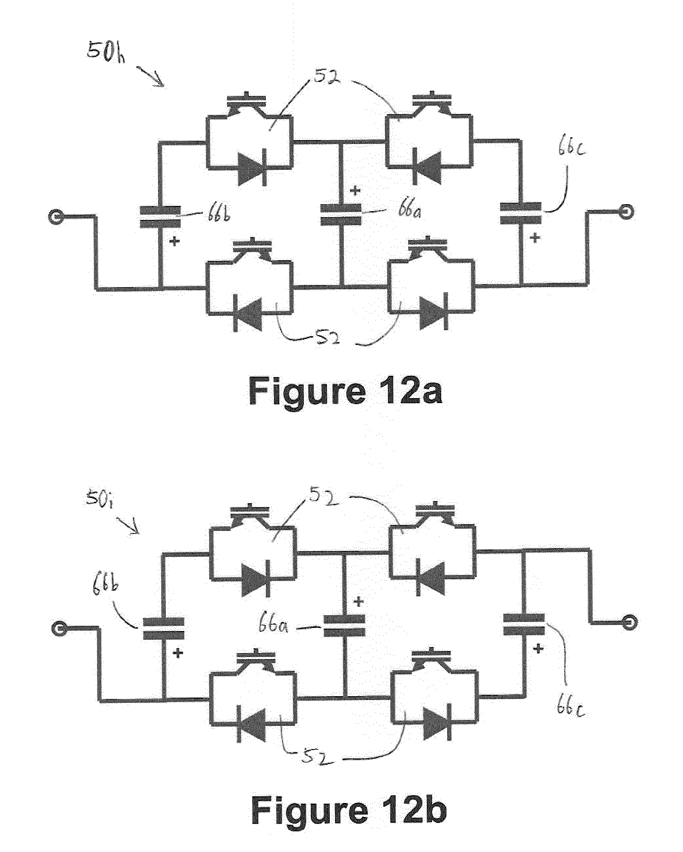

In a first configuration shown in Figure 12, the ladder-network module 50h is operated as follows:

The first, second and third capacitors 66a,66b,66c of the ladder-network module 50h are bypassed when the primary switching elements 52 are configured to form a short circuit in the ladder-network module 50h, causing the current in the voltage source converter to pass through the short circuit and bypass the first, second and third capacitors 66a,66b,66c. This enables the module 50h to provide a zero voltage.

The first and third capacitors 66a,66c of the ladder-network module 50h are inserted into the chain-link converter when the primary switching elements 52 are configured to allow the converter current to flow into and out of the first and third capacitors 66a,66c, which are then able to charge or to discharge their stored energies and provide a combined voltage of the first and third capacitors 66a,66c. The second capacitor 66b is bypassed in this configuration and thereby does not contribute a voltage to the voltage source converter.

The first and second capacitors 66a,66b of the ladder-network module 50h are inserted into the chain-link converter when the primary switching elements 52 are configured to allow the converter current to flow into and out of the first and second capacitors 66a,66b, which are then able to charge or to discharge their stored energies and provide a combined voltage of the first and second capacitors 66a,66b. The third capacitor 66c is bypassed in this configuration and thereby does not contribute a voltage to the voltage source converter.

The second and third capacitors 66b,66c of the ladder-network module 50h are inserted into the chain-link converter when the primary switching elements 52 are configured to allow the converter current to flow into and out of the second and third capacitors 66b,66c, which are then able to charge or to discharge their stored energies and provide a combined voltage of the second and third capacitors 66b,66c. The first capacitor 66a is bypassed in this configuration and thereby does not contribute a voltage to the voltage source converter.

In a second configuration shown in Figure 12b, the ladder-network module 50i is operated as follows:

The first capacitor 66a of the ladder-network module 50i is inserted into the chain-link converter when the primary switching elements 52 are configured to allow the converter current to flow into and out of the first capacitor 66a, which are then able to charge or to discharge its stored energy and provide a voltage of +V_{DC}/2 in magnitude. The second and third capacitors 66b,66c are bypassed in this configuration and thereby does not contribute a voltage to the voltage source converter.

The second capacitor 66b of the ladder-network module 50i is inserted into the chain-link converter when the primary switching elements 52 are configured to allow the converter current to flow into and out of the second capacitor 66b, which are then able to charge or to discharge its stored energy and provide a voltage of -V_{DC}/2 in magnitude. The first and third capacitors 66a,66c are bypassed in this configuration and thereby does not contribute a voltage to the voltage source converter.

The third capacitor 66c of the ladder-network module 50i is inserted into the chain-link converter when the primary switching elements 52 are configured to allow the converter current to flow into and out of the third capacitor 66c, which are then able to charge or to discharge its stored energy and provide a voltage of +V_{DC}/2 in magnitude. The first and second capacitors 66a,66b are bypassed in this configuration and thereby does not contribute a voltage to the voltage source converter.

The first, second and third capacitors 66a,66b,66c of the ladder-network module 50i are inserted into the chain-link converter when the primary switching elements 52 are configured to allow the converter current to flow into and out of the first, second and third capacitors 66a,66b,66c, which is then able to charge or to discharge their respective stored energies and provide a combined voltage of +1.5V_{DC}/2.

In other embodiments, it is envisaged that the insertion of the first, second and/or third capacitors 66a,66b,66c may result in the provision of a module voltage of different polarity and/or magnitude by connecting each of the first, second and/or third capacitors 66a,66b,66c in a reverse configuration.

The provision of the third storage capacitor 66b therefore provides further flexibility when varying the characteristics of the discrete voltage output states and/or the asymmetrical voltage output of the ladder-network module 50h,50i to suit different power applications.

In addition, the ladder-network module 50h,50i can conduct current in both directions when each of the first, second and third capacitors 66a,66b is either bypassed or inserted into the respective chain-link converter.

Preferably each ladder-network module 50g,50h,50i may be operably connected in use to a global control unit and the primary switching elements 52 of each ladder-network module 50g,50h,50i are controllable in use so that each ladder-network module 50g,50h,50i provides a voltage in response to control signals received from the global control unit.

Each ladder-network module 50g,50h,50i may preferably further include a local control unit and the primary switching elements 52 of each ladder-network module 50g,50h,50i are controllable in use so that each ladder-network module 50g,50h,50i provides a voltage in response to control signals received from the respective local control unit.

In embodiments of the invention, control of the required voltage output states may be assigned to the global control unit while control of the other less-used voltage output states may be assigned to the local control unit. For example, the global control unit may be used to control the ladder-network module 50g of Figure 10 to switch between a zero voltage output state and a positive voltage output state having a voltage of +V_{DC} while the local control unit may be used to control the respective module to switch to an intermediate voltage output state having a voltage of +V_{DC}/2. The intermediate voltage output state may be applied to "soften" the edges of the output voltage pulse to provide a more gradual transition between the zero and positive output voltage states.

It is possible to further increase the power output of the voltage source converter by configuring the primary switching elements 52 of each ladder-network module 50g,50h,50i to insert the capacitors 54 to provide a voltage that adds to the DC voltage of the DC network and thereby result in a higher peak AC voltage at the AC terminal.

The provision of first, second and third capacitors 66a,66b,66c results in reductions in size, weight and cost of the voltage source converter 30 when compared to a voltage source converter based on conventional half-link or full-link modules. This is because a voltage source converter based on conventional half-link or full-link modules require a higher number of ladder-network modules to generate a similar asymmetrical voltage output since the conventional half-link and full-link modules rely on the use of a single capacitor.

Consequently the voltage source converter 30 may be used to interconnect AC and DC networks 40,42 with voltages of different magnitudes.

It is envisaged that one or more such chain-link converters 48 may be used in other configurations of voltage source converters interconnecting AC and DC networks 40,42.

Preferably each module 50 is operable to generate a voltage to oppose the flow of current created by a fault, in use, in the AC or DC networks 40,42. Each module 50 may be switched into circuit to inject the opposing voltage into the voltage source converter 30 to extinguish the fault current and thereby prevent damage to the voltage source converter components.

For example, in use, a voltage source converter 30 including multiple converter limbs 32 may experience a short circuit across the DC network 40 to which it is connected. This short circuit occurring across the DC network 40 results in both voltages at the positive and negative terminals 38a,38b of the DC network 40 dropping to zero volts. When this happens, a high fault current can flow from the AC network through the first limb portion 44a of a converter limb 32, and return to the AC network 42 through the short circuit and the second limb portion of another converter limb 32.

The low impedance of the short circuit means that the fault current flowing in the voltage source converter 30 may exceed the current rating of the voltage source converter 30.

The fault current may be minimized by opposing the driving voltage from the non-faulty electrical network. This is carried out by configuring the primary switching elements 52 of one or more modules 50 such that one or more capacitors are inserted into the voltage source converter 30 to provide a voltage which opposes and thereby reduces the driving voltage. For example, the primary switching elements 52 of the module 50g of Figure 10 may be controlled by the global control unit to insert the first capacitor 66a to provide an opposing voltage of - V_{DC}/2 to reduce the driving voltage of the non-faulty AC network 42.

The use of the voltage source converter components to carry out both voltage conversion and extinguishment of fault currents may eliminate the need for separate protective circuit equipment, such as a circuit breaker or isolator. This leads to savings in terms of hardware size, weight and costs. In addition, the fast switching capabilities of the primary switching elements allow each module 50 to respond quickly to the development of faults in the associated electrical networks 40,42 and provide the opposing voltage to limit or extinguish the fault current.

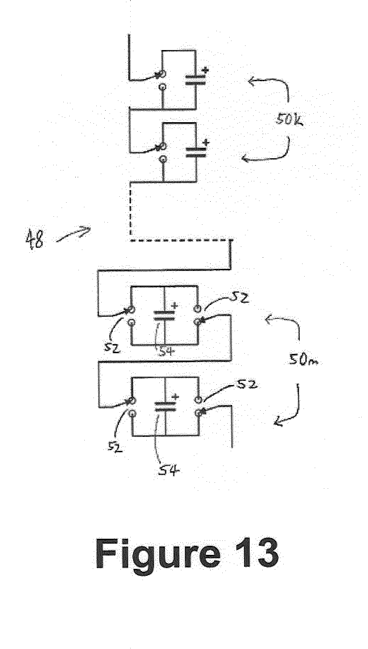

In Figure 13, the chain-link converter includes a first group of 2-quadrant unipolar modules 50k connected in series with a second group of modules. Each capacitor 54 of each module of the second group is connected with a plurality of insulated gate bipolar transistors 52 in a full-bridge arrangement to define a single-capacitor 4-quadrant bipolar module 50m that can provide negative, zero or positive voltage and can conduct current in two directions.

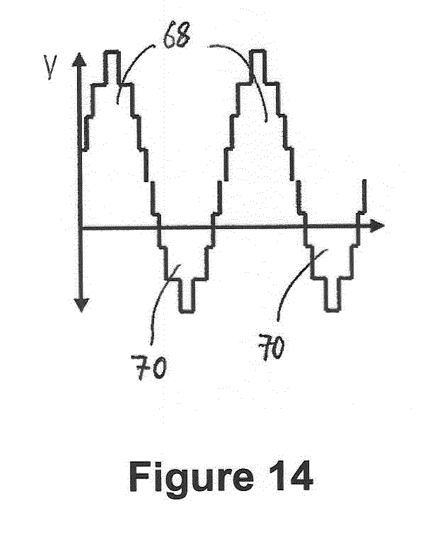

Such an arrangement leads to an asymmetrical voltage output for the chain-link converter 48, as shown in Figure 14. In use, both the 2-quadrant unipolar modules and single-capacitor 4-quadrant bipolar modules are operable to contribute to the positive voltage output 68 while only the single-capacitor 4-quadrant bipolar modules are operable to contribute to the negative voltage output 70.

The number of single-capacitor 4-quadrant bipolar modules 50m in the chain-link converter 48 is set to generate a sufficient voltage to generate a voltage to oppose the flow of fault current in the event of a fault in the DC network. The inclusion of the 2-quadrant unipolar modules 50k in the chain-link converter 48 reduces the number of switches in operation whilst allowing the voltage source converter to carry out its normal operation.

The combination of 2-quadrant unipolar modules and single-capacitor 4-quadrant bipolar modules therefore provides the voltage source converter with DC fault blocking capability whilst minimising the number of switches in operation and thereby reducing switching losses.

It is envisaged that in other embodiments, the chain-link converter may include a first group of 2-quadrant unipolar modules connected in series with a second group of ladder-network modules or a second group of 4-quadrant bipolar modules having a multi-level converter arrangement so as to provide DC fault blocking capability whilst minimising switching losses.

Preferably the first and second groups of modules include equal numbers of modules. The ratio of the modules in the first group to the modules in the second group however may vary depending on the requirements of the associated power application.

## Claims

1. A voltage source converter (30) for use in high voltage direct current power transmission and reactive power compensation comprising at least one chain-link converter (48) operably connected in use between AC and DC networks (40, 42), the or each chain-link converter (48) including first and second groups of modules (50a, 50b, 50c, 50g) connected in series, each module including at least two energy storage devices (54) and a plurality of primary switching elements controllable in use so that the respective chain of modules connected in series provides a stepped variable alternating voltage source, **characterized in that** each module can conduct current in two directions and produce three or more discrete voltage steps by combination of the energy storage devices with:
- either the energy storage devices being permanently connected in series with one or more intermediate voltage tapping points made available,
- or the energy storage devices being separated by one or more primary switching elements to form a ladder network module with the voltage on each energy storage device operated at a different voltage magnitude or with a different voltage polarity to maintain a defined voltage difference across the off-state primary switching elements separating the energy storage devices.

2. A voltage source converter (30) according to Claim 1, wherein the primary switching elements are controlled in use so that a discrete voltage step is a zero voltage.

3. A voltage source converter (30) according to Claim 1 or 2, wherein the primary switching elements are controlled in use so that at least two discrete voltage steps are positive voltages or at least two discrete voltage steps are negative voltages.

4. A voltage source converter (30) according to any of Claims 1 to 3, wherein, when the energy storage devices are separated by one or more primary switching elements to form a ladder network module, one of the second pair of electronic blocks further includes a third of the energy storage devices.

5. A voltage source converter (30) according to any preceding Claim, further including at least one converter limb including first and second DC terminals for connection in use to a DC network and an AC terminal for connection in use to an AC network, the or each converter limb defining first and second limb portions, each limb portion including a chain-link converter connected between a respective one of the first and second DC terminals and the AC terminal, each chain-link converter being operable to generate a voltage waveform at the respective AC terminal.

6. A voltage source converter (30) according to Claim 5, wherein each limb portion further includes at least one secondary switching element connected in series with the chain-link converter between the respective DC terminal and the AC terminal, the secondary switching elements of the first and second limb portions being operable to switch the respective chain-link converter in and out of circuit between the respective DC terminal and the AC terminal

7. A voltage source converter (30) according to Claim 5 or Claim 6, including multiple converter limbs, each limb including an AC terminal for connection in use to a respective phase of a multi-phase AC network.

8. A voltage source converter (30) according to any preceding claim wherein the energy storage devices of the or each module of the first group of modules are connected with the respective primary switching elements in a half-bridge multi-level converter arrangement to define a 2-quadrant unipolar module that can provide zero or positive voltage and can conduct current in two directions.

9. A voltage source converter (30) according to Claim 8, wherein the or each module of the second groups of modules includes at least two energy storage devices and the energy storage devices of the or each module of the second group are connected with the respective primary switching elements in a half-bridge multi-level converter arrangement to define a 2-quadrant unipolar module that can provide zero or positive voltage and can conduct current in two directions.

10. A voltage source converter (30) according to Claim 8 wherein the or each energy storage device of the or each module of the second group of modules is connected with the respective primary switching elements in a full-bridge arrangement to define a 4-quadrant bipolar module that can provide negative, zero or positive voltage and can conduct current in two directions.

11. A voltage source converter (30) according to any of Claims 1 to 3, wherein the energy storage devices of the or each module of the first group of modules are connected with the respective primary switching elements in a full-bridge multi-level converter arrangement to define a 4-quadrant bipolar module that can provide negative, zero or positive voltage and can conduct current in two directions.

12. A voltage source converter (30) according to Claim 10 or Claim 11, wherein the or each module of the second group of modules includes at least two energy storage devices and the energy storage devices of the or each module of the second group are connected with the respective primary switching elements in a full-bridge multi-level converter arrangement to define a 4-quadrant bipolar module that can provide negative, zero or positive voltage and can conduct current in two directions.

13. A voltage source converter (30) according to any preceding claim wherein the first and second groups of modules include equal numbers of modules.

14. A voltage source converter (30) according to any of Claims 8 to 13 wherein the multilevel converter arrangement is a flying capacitor converter arrangement or a neutral point diode clamped converter arrangement.

15. A voltage source converter (30) according to any preceding claim wherein each switching element includes a semiconductor device.

16. A voltage source converter (30) according to Claim 15 wherein the semiconductor device is an insulated gate bipolar transistor, a field effect transistor, a gate turn-off thyristor, a gate commutated thyristor or an integrated gate commutated thyristor.

17. A voltage source converter (30) according to Claim 15 or Claim 16 wherein the semiconductor device is connected in parallel with an anti-parallel diode.

18. A voltage source converter (30) according to any preceding claim wherein each energy storage device includes a capacitor, a fuel cell, a battery or an auxiliary AC generator with an associated rectifier.

19. A voltage source converter (30) according to any preceding claim wherein the primary switching elements of each module are controllable in use to generate a voltage to oppose the flow of current created by a fault, in use, in the AC or DC networks.

20. A voltage source converter (30) according to any preceding claim wherein each module is operably connected in use to a global control unit and the primary switching elements of each module are controllable in use so that each module provides a voltage in response to control signals received from the global control unit.

21. A voltage source converter (30) according to any preceding claim wherein each module further includes a local control unit and the primary switching elements of each module are controllable in use so that each module provides a voltage in response to control signals received from the respective local control unit.

22. A voltage source converter (30) according to any preceding claim wherein the primary switching elements of each module are controllable in use to regulate the voltage of the respective energy storage devices.
